# EUROPEAN PATENT SPECIFICATION

(11) **EP 3 246 456 B1**
(45) Date of publication and mention of the grant of the patent: **21.08.2019**
(21) Application number: 15877576.7
(22) Date of filing: 03.07.2015
(51) Int. Cl.: D06F 58/24, D06F 58/28, D06F 58/20, D06F 58/26

(54) **LAUNDRY DRYER CONTROL METHOD**
WÄSCHETROCKNERSTEUERUNGSVERFAHREN
PROCÉDÉ DE COMMANDE DE SÈCHE-LINGE

(30) Priority: 12.01.2015 CN 201510013812
(43) Date of publication of application: 22.11.2017
(73) Proprietor: Qingdao Haier Washing Machine Co., Ltd., Qingdao, Shandong 266101 (CN)
(72) Inventor: XU, Sheng, Qingdao Shandong 266101 (CN); SONG, Huacheng, Qingdao Shandong 266101 (CN); TIAN, Shujun, Qingdao Shandong 266101 (CN); SHAN, Shiqiang, Qingdao Shandong 266101 (CN)
(74) Representative: Ziebig, Marlene
(86) International application number: PCT/CN2015/083314
(87) International publication number: WO 2016/112661

(56) References cited:
- EP-A1- 2 612 964
- EP-A1- 2 612 966
- WO-A2-2012/134148
- CN-A- 1 766 212
- CN-A- 1 766 213
- CN-A- 1 766 213
- CN-A- 101 560 724
- CN-A- 103 850 110
- CN-A- 104 420 144

## Description

### TECHNICAL FIELD

The present invention relates to the field of clothes dryers, in particular to a control method for a clothes dryer.

### BACKGROUND

An existing heat pump type clothes drying device is provided with an air circulation channel as follows: heating air heated by a condenser in a heat pump circulation system is sent into a drying chamber filled with clothes, wet air capturing moisture from the clothes is sent back to an evaporator for dehumidification, and dehumidified air is heated by the condenser once again and then sent into the drying chamber.

In order to improve the clothes drying speed, electrical heating pipes are arranged on some heat pump clothes dryers for auxiliary heating; with the combination of the electrical heating pipe and the heat pump system, the temperature rising time of the clothes dryer is reduced, and the drying time is reduced. However, the reduced time is limited within a time range only from the time when a compressor is just turned on for drying until the time when the load of the heat pump system reaches the maximum load (such as the condensing temperature of the compressor reaches 70°C or the exhaust air temperature of the compressor reaches 105°C). The reason is that the electrical heating pipe has to stop heating to reduce the load of the heat pump system, when the load of the heat pump system reaches the highest value. After the electrical heating pipe stops heating, the drying speed of the dryer is the same as that of the mode which does not use the electrical heating pipe. If a variable-frequency compressor is used, although the load of the heat pump system can be reduced by reducing the operating frequency of the compressor by making use of frequency regulation of the compressor, a vapour condensing speed is reduced due to reduction of the operating frequency of the compressor, and the drying speed is also affected. In a word, the drying time is not reduced too much by merely adding the electrical heating pipe, when a refrigerating system is not improved.

CN1766213A discloses a rolling drum to form space and dry objects, a precooler to exchange heat with wet air exhausted from drum to reduce its temperature and contained water, a cooling system to exchange heat with wet air from precooler to converse it into dried air, a heater to heat the dried air before it returns to drum, a blast fan to force circulating wet air and dried air. WO2012134148A2 discloses a controlling method for a clothes dryer capable of enhancing energy efficiency and reducing a drying time so as for the dryer to operate in an efficient and stable manner, by virtue of using at least one of a heat pump system and a heater as a heat source for heating up air for drying a target to be dried.

Therefore, the present disclosure is provided.

### SUMMARY

The object of the present invention to overcome deficiencies of the prior art, and provides a control method for a clothes dryer. The clothes drying speed is improved and the clothes drying time is reduced in a fast mode. In order to achieve the purpose, the present invention adopts the technical scheme as follows: a control method for a clothes dryer comprising a clothes drying drum, a heat pump system and an electrical heating system, wherein the heat pump system comprises a compressor, a condenser, an evaporator and a throttling device, and the electrical heating system is an electrical heating pipe. Characterized by comprising controlling the heat pump system and the electrical heating system to work cooperatively, thus allowing the clothes dryer to at least comprise a fast mode in which the electrical heating pipe is turned on after the compressor is turned on and operated stably; air about to enter the clothes drying drum is controlled to be firstly heated by the condenser of the heat pump system and further heated by the electrical heating pipe, and then to enter the clothes drying drum; and the load of the heat pump system is reduced in an auxiliary condensing manner before the heating pipe is switched off, when the load of the heat pump system is close to the maximum load. The heat pump system and the electrical heating system are controlled to work cooperatively, thus allowing the clothes dryer to also comprise an energy-saving mode, in which the electrical heating pipe is turned off, and the air about to enter the clothes drying drum is only heated by the condenser of the heat pump system; and a general mode, in which the electrical heating pipe is turned on, the air about to enter the clothes drying drum is firstly heated by the condenser of the heat pump system and further heated by the electrical heating pipe, the electrical heating pipe is turned off when the load of the heat pump system reaches the maximum load or the temperature of the heat pump system reaches the pre-set temperature, and thus the air entering the clothes drying drum is only heated by the condenser of the heat pump system. The auxiliary condensing manner is to control air exhausted from the clothes drying drum to be pre-condensed by a water condenser, so as to reduce the temperature of the air entering the heat pump system and reduce the load of the heat pump system.

The auxiliary condensing manner is to assist heat dissipation of the condenser of the heat pump system via an auxiliary fan, so as to reduce the temperature of the condenser and reduce the load of the heat pump system.

The auxiliary condensing manner is to control air exhausted from the clothes drying drum to be pre-condensed by an air condenser, so as to reduce the temperature of the air entering the heat pump system and reduce the load of the heat pump system; preferably, an auxiliary fan is arranged on the air condenser.

When the temperature of the condenser of the heat pump system reaches a maximum value T₁, the heat pump system reaches the maximum load; and when the temperature of the condenser is up to T₁-ΔT, the heat pump system is close to the maximum load.

The temperature of the condenser is detected. When the temperature of the condenser is higher than T₁-ΔT, the water condenser is turned on to pre-condense the air exhausted from the clothes drying drum, or the auxiliary fan is turned on to assist heat dissipation of the condenser of the heat pump system, or the air condenser is turned on to pre-condense the air exhausted from the clothes drying drum.

When the temperature of the air entering the clothes drying drum is up to a set temperature T₂, the electrical heating pipe is turned off, and when the temperature of the air entering the clothes drying drum is dropped to a set temperature T₃, the electrical heating pipe is turned on once again, wherein T₂ is higher than T₃.

In the energy-saving mode and the general mode, the temperature of the condenser is detected, and when the temperature of the condenser reaches the maximum value T₁, the load of the heat pump system is reduced in the auxiliary condensing manner.

A highest operating frequency of the compressor in the fast mode is higher than or equal to that of the compressor in the general mode, and a lowest operating frequency of the compressor in the fast mode is higher than or equal to that of the compressor in the general mode. The highest operating frequency of the compressor in the general mode is higher than or equal to that of the compressor in the energy-saving mode, and the lowest operating frequency of the compressor in the general mode is higher than or equal to that of the compressor in the energy-saving mode.

A clothes dryer being controllable by the abovementioned control method comprises a clothes drying drum, a heat pump system and an electrical heating system, wherein the heat pump system comprises a compressor, a condenser, an evaporator and a throttling device, and the electrical heating system is an electrical heating pipe. The clothes dryer also comprises at least one of a water condenser, an air condenser and an auxiliary fan, wherein each of the water condenser and the air condenser is arranged between an air outlet of the clothes drying drum and an air inlet of the evaporator, and the auxiliary fan is arranged on the condenser.

By using the technical scheme of the method provided by the present invention, following beneficial effects are achieved:the electrical heating system and the heat pump system perform heating simultaneously, and when the load of the heat pump system is close to the maximum load, the load of the heat pump system is reduced in the auxiliary condensing manner, so that the load of the heat pump system is reduced without changing the compressor frequency, the electrical heating pipe is prevented from stopping working, the clothes drying speed is improved, and the clothes drying time is reduced. A plurality of modes is set, and a user can select the clothes drying modes according to needs; the user can select the fast mode to dry the clothes rapidly when in a hurry, also can select the energy-saving mode to reduce energy consumption at ordinary times, and also can select the general mode to reasonably utilize the clothes drying speed and consume energy, and thus energy utilization is maximized.

In the following, the present invention is further specifically described through combining with the drawings.

### BRIEF DESCRIPTION OF DRAWINGS

Fig. 1 is a structural diagram of a clothes dryer provided by the present invention;
Fig. 2 is a structural diagram of a clothes dryer in the other embodiment of the present invention; and
Fig. 3 is a structural diagram of a clothes dryer in another embodiment of the present invention.

Reference signs in the drawings: 1, compressor; 2, condenser; 3, evaporator; 4, throttling device; 5, electrical heating pipe; 6, clothes drying drum; 7, water condenser; 8, water valve; 9, fan; 10, auxiliary fan; 11, air condenser.

### DETAILED DESCRIPTION

### Embodiment 1:

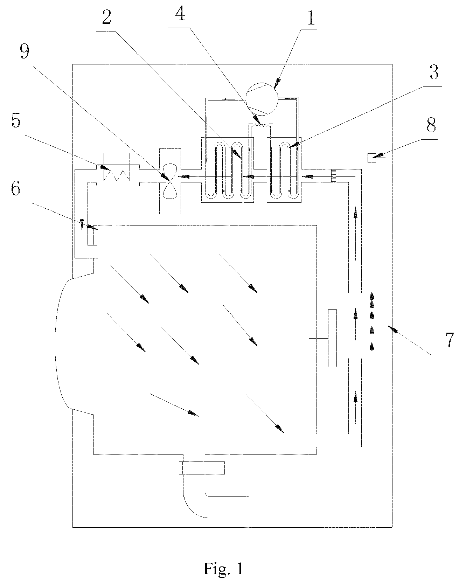

As shown in the Fig.1, a clothes dryer being controllable by the control method according to the invention comprises a clothes drying drum 6, a heat pump system and an electrical heating system, wherein the heat pump system comprises a compressor 1, a condenser 2, an evaporator 3 and a throttling device 4, and the electrical heating system is an electrical heating pipe 5. The clothes dryer also comprises a water condenser 7 arranged between an air outlet of the clothes drying drum 6 and an air inlet of the evaporator. The condenser 2 of the heat pump system and the electrical heating pipe 5 perform heating simultaneously, so that the temperature of air entering the drum is increased; the water condenser 7 can improve the condensing speed and thus the drying speed is improved. A water valve 8 is arranged on the water condenser 7, and thus turning-on or turning-off of the water condenser 7 is controlled by opening or closing the water valve 8.

It is commonly accepted that the clothes drying speed will be improved and the clothes drying time will be reduced by adding the electrical heating pipe 5 for auxiliary heating. However, actually, the clothes drying time is reduced to some extent after the electrical heating pipe 5 is added. But the reduced time is limited within a time range only from the time when the compressor is just turned on for drying until the time when the load of the heat pump system reaches the maximum load. The electrical heating pipe has to stop heating to reduce the load of the heat pump system, when the load of the heat pump system reaches the highest value. After the electrical heating pipe stops heating, the drying speed of the dryer is the same as that in the mode which does not use the electrical heating pipe. If a variable-frequency compressor is used, although the load of the heat pump system can be reduced by reducing the operating frequency of the compressor by making use of frequency regulation of the compressor, the vapour condensing speed is reduced due to reduction of the operating frequency of the compressor, and the drying speed is also affected. In a word, the drying time is not reduced too much by merely adding the electrical heating pipe 5, when a refrigerating system is not improved. Therefore, it does not work as people expect that the clothes drying speed can be greatly improved by adding the electrical heating pipe 5. In the clothes dryer being controllable by the control method according to the invention, the water condenser 7 is arranged at the air outlet of the clothes drying drum, so that the water condensing efficiency is high, the temperature of the air exhausted from the clothes drying drum can be reduced rapidly, the temperature of the air entering the evaporator 3 and the condenser 2 can be reduced. Thus the load of the heat pump system is reduced without changing the compressor frequency, the electrical heating pipe 5 is prevented from stopping working, the clothes drying speed is improved, and the clothes drying time is reduced.

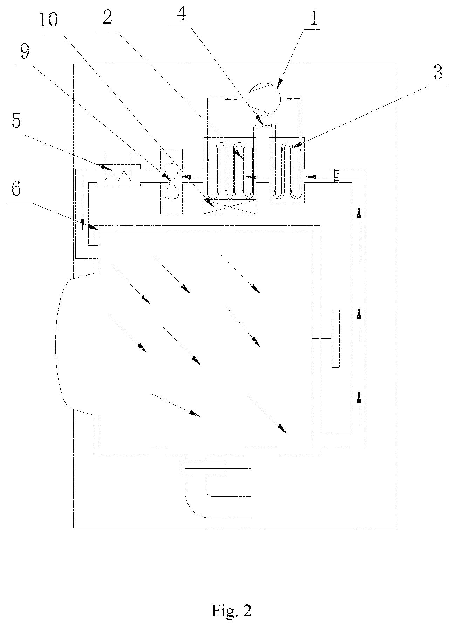

Or as shown in the Fig.2, a clothes dryer comprises a clothes drying drum 6, a heat pump system and an electrical heating system, wherein the heat pump system comprises a compressor 1, a condenser 2, an evaporator 3 and a throttling device 4, and the electrical heating system is an electrical heating pipe 5. The clothes dryer also comprises an auxiliary fan 10 arranged on the condenser 2. Heat dissipation of the condenser 2 can be accelerated, and thus the temperature of the condenser can be reduced. The load of the heat pump system is reduced without changing the compressor frequency, the electrical heating pipe is prevented from stopping working, the clothes drying speed is improved, and the clothes drying time is reduced.

### Embodiment 2:

The present invention discloses a control method for a clothes dryer comprising a clothes drying drum 6, a heat pump system and an electrical heating system, wherein the heat pump system comprises a compressor 1, a condenser 2, an evaporator 3 and a throttling device 4, and the electrical heating system is an electrical heating pipe 5. The condenser 2 and the electrical heating system 5 are controlled to work cooperatively, thus allowing the clothes dryer to comprise the following modes:A fast mode, in which when clothes are drying, the electrical heating pipe 5 is turned on; air about to enter the clothes drying drum 6 is controlled to be firstly heated by the condenser 2 of the heat pump system and further heated by the electrical heating pipe 5, and then to enter the clothes drying drum 6; and the load of the heat pump system is reduced in an auxiliary condensing manner before the heating pipe is switched off, when the load of the heat pump system is close to the maximum value. The auxiliary condensing manner is to control air exhausted from the clothes drying drum 6 to be pre-condensed by a water condenser 7, so as to reduce the temperature of the air entering the heat pump system and reduce the load of the heat pump system. Under the fast mode, the air entering the clothes drying drum 6 is simultaneously heated by the condenser 2 and the electrical heating pipe 5, and the temperature of the air entering the drum is high, so that the clothes drying speed is fast. Meanwhile, the air

exhausted from the clothes drying drum 6 is pre-condensed by the water condenser 7, so that the temperature of the air entering the heat pump system is reduced, the load of the heat pump system can be prevented from reaching the maximum load. Meanwhile, the condition that the electrical heating pipe 5 is always turned on for heating the air can be ensured, and the high temperature of the air entering the clothes drying drum is continuously maintained, so that the clothes drying speed is improved. And the situation that the clothes drying speed cannot be improved as the working efficiency is reduced due to the fact that the electrical heating pipe is turned off or the frequency of the compressor is reduced to reduce the load of the heat pump system, after the load of the heat pump system reaches the maximum load, is avoided.

An energy-saving mode, in which the electrical heating pipe 5 is turned off, the air entering the clothes drying drum 6 is only heated by the condenser 2 of the heat pump system. Only the heat pump system is used for heating, so that electricity consumption can be avoided when the electrical heating pipe 5 is heating.

A general mode, in which the electrical heating pipe 5 is turned on, the air entering the clothes drying drum 6 is firstly heated by the condenser 2 of the heat pump system and further heated by the electrical heating pipe, and the electrical heating pipe is turned off after the load of the heat pump system reaches the maximum load. And thus the air entering the clothes drying drum is only heated by the condenser of the heat pump system. In an initial drying period, the electrical heating pipe 5 and the condenser 2 perform heating simultaneously, so that the temperature rising speed is improved, the temperature of the air entering the drum is improved, and the clothes drying speed is improved. When the load of the heat pump system reaches the maximum load or the temperature of the heat pump system reaches the pre-set temperature, the electrical heating pipe is turned off, only the heat pump system is used for heating, and thus electricity consumption can be avoided when the electrical heating pipe 5 is heating. In such a mode, the balance of the clothes drying speed and the energy consumption can be achieved.

A plurality of modes is set, and a user can select the clothes drying modes according to needs. The user can select the fast mode to dry the clothes rapidly when in a hurry, also can select the energy-saving mode to reduce energy consumption at ordinary times, and also can select the general mode to reasonably utilize the clothes drying speed and consume energy, and thus energy utilization is maximized.

When the temperature of the condenser of the heat pump system reaches the maximum value T₁, the load of the heat pump system reaches the maximum load. The temperature of the condenser is up to T₁-ΔT, when the load of the heat pump system is close to the maximum load. The temperature of the condenser is detected, and when the temperature of the condenser exceeds T₁-ΔT, the water condenser is turned on to pre-condense the air exhausted from the clothes drying drum.

The water condenser 7 can also be turned on to pre-condense the air exhausted from the clothes drying drum 6 while the electrical heating pipe 5 is turned on, the air exhausted from the clothes drying drum can be pre-condensed at the beginning, and thus the condensing speed is improved. When the electrical heating pipe 5 and the condenser 2 perform heating simultaneously, the load of the heat pump system can be prevented from reaching the maximum load, so that the electrical heating pipe 5 does not stop working, the temperature of the air entering the clothes drying drum is high, and thus the drying efficiency is high. Or the maximum load reaching time of the heat pump system is prolonged, the frequency of stopping working of the electrical heating pipe 5 is reduced, the air entering the clothes drying drum in a clothes drying period has a high average temperature, and thus the drying efficiency is high.

When the temperature of the air entering the clothes drying drum is up to the set temperature T₂, the electrical heating pipe 5 is turned off. And when the temperature of the air entering the clothes drying drum is dropped to the set temperature T₃, the electrical heating pipe 5 is turned on once again, wherein T₂>T₃. If the temperature of the air entering the clothes drying drum is too high, the clothes may be damaged, so that the temperature of the air entering the clothes drying drum 6 should be controlled to be not higher than the pre-set value T₂ which generally is 110∼130°C. After the electrical heating pipe 5 is turned off, the temperature of the air will drop when the circulated air enters the clothes drying drum. The electrical heating pipe needs to be turned on once again to increase the temperature of the air entering the drum, when the temperature is dropped to the set temperature T₃ which generally is 90-110°C. When the temperature of the air entering the drum is about 100°C, the clothes drying speed of the air is the highest.

In the energy-saving mode and the general mode, the load of the heat pump system can also be reduced in the auxiliary condensing manner which is to control the air exhausted from the clothes drying drum 6 to be pre-condensed by the water condenser 7, so as to reduce the temperature of the air entering the heat pump system and reduce the load of the heat pump system. By detecting the temperature of the condenser 2, when the temperature of the condenser 2 reaches the maximum value T₁, the air exhausted from the clothes drying drum is pre-condensed by the water condenser 7, so as to reduce the temperature of the air entering the condenser 2.

Specifically, in the fast mode, the electrical heating pipe 5 works in the initial drying period, and the electrical heating pipe 5 is turned on after the heat pump system is turned on and operated stably. The electrical heating pipe 5 and the condenser 2 of the heat pump system are simultaneously used for heating the air about to enter the clothes drying drum 6 from the initial period to as much time as possible. For example, when the condenser 2 reaches 30°C, the air is also heated to be close to 30°C after passing through the condenser 2, and further heated to 70°C by the electrical heating pipe. When the condenser reaches 70°C, the air is also heated to be close to 70°C after passing through the condenser 2, and further heated to 110°C by the electrical heating pipe 5. Therefore, the temperature of the air entering the clothes drying drum 6 is far higher than that of the air only heated by the heat pump system. High temperature has a good clothes drying effect, after the condenser 2 reaches the highest load of 70°C, the electrical heating pipe is not turned off, If the temperature of the condenser 2 exceeds the maximum load, a water valve 8 of the water condenser 7 is opened, and the air is pre-condensed by using running water or water in a water tank before entering the evaporator 3 and the condenser 2, so that the temperature of the air entering the evaporator 3 is reduced, the load of the heat pump system is reduced, and meanwhile a pre-condensing function is achieved and the condensing speed of vapour in hot and humid air is improved. The water valve 8 is continuously opened.

When the temperature of the condenser 2 exceeds 70°C or the set temperature, or the temperature of the air entering the drum exceeds the set temperature of 120°C, the load of the heat pump system is regulated by turning off the electrical heating pipe.

In order to improve the condensing speed, the water valve 8 of the water condenser 7 can be opened once the electrical heating pipe 5 is turned on. By reducing the temperature of the air entering the heat pump system and pre-condensing the air, the condensing speed is improved, and the maximum load reaching time of the heat pump system is prolonged.

In the energy-saving mode, the electrical heating pipe 5 is not turned on, the air is only heated by the condenser 2 of the compressor, and the highest temperature of the air is about 70°C. Along with temperature rising in the clothes drying drum 6, when the condensing temperature of the heat pump system reaches 70°C, the load needs to be reduced, and otherwise the load may exceed the tolerance range of the compressor. For the time being, the water valve 8 of the water condenser 7 is opened, and the air is pre-condensed by using the running water or the water in the water tank before entering the evaporator 3 and the condenser 2, so that the temperature of the air entering the evaporator 3 is reduced, and the load of the heat pump system is reduced. When the condensing temperature of the compressor is reduced to 67°C or the set temperature, the water valve is closed. Hereby, the load of the heat pump system is regulated.

In the general mode, the electrical heating pipe 5 works in the initial drying period, and the electrical heating pipe 5 is turned on after the heat pump system is turned on and operated stably. In the initial period, the electrical heating pipe 5 and the condenser 2 of the compressor are simultaneously used for heating the air. For example, when the condenser reaches 30°C, the air is also heated to be close to 30°C after passing through the condenser 2, and further heated to 70°C by the electrical heating pipe 5, and thus the temperature rising speed of the air entering the clothes drying drum 6 is far higher than the heating speed realized by only using the condenser 2 of the heat pump system. After the condenser 2 reaches the maximum load of 70°C, the electrical heating pipe 5 is turned off, and only the evaporator 3 and the condenser 2 of the heat pump system are used for condensing and heating. Afterwards, if the temperature of the condenser 2 exceeds the tolerance range of the compressor once again, the water valve 8 of the water condenser 7 is opened, the air is pre-condensed by using the running water or the water in the water tank before entering the evaporator 3 and the condenser 2, so that the temperature of the air entering the evaporator 3 is reduced, and the load of the heat pump system is reduced. When the condensing temperature of the compressor is reduced to 67 °C or the set temperature, the water valve 8 is closed. Hereby, the load of the heat pump system is regulated.

The highest operating frequency of the compressor in the fast mode is higher than or equal to that of the compressor in the general mode, and the lowest operating frequency of the compressor in the fast mode is higher than or equal to that of the compressor in the general mode. The highest operating frequency of the compressor in the general mode is higher than or equal to that of the compressor in the energy-saving mode, and the lowest operating frequency of the compressor in the general mode is higher than or equal to that of the compressor in the energy-saving mode. The frequency of the compressor 1 is high, so that the working efficiency is high, and the clothes drying speed may also be improved.

### Embodiment 3:

As shown in the Fig. 2, a clothes dryer in the present embodiment comprises an auxiliary fan 10. The auxiliary condensing manner is to assist heat dissipation of a condenser 2 of a heat pump system via the auxiliary fan 10, so as to reduce the temperature of the condenser and reduce the load of the heat pump system. The other methods are all the same as those in the embodiment 2.

### Embodiment 4:

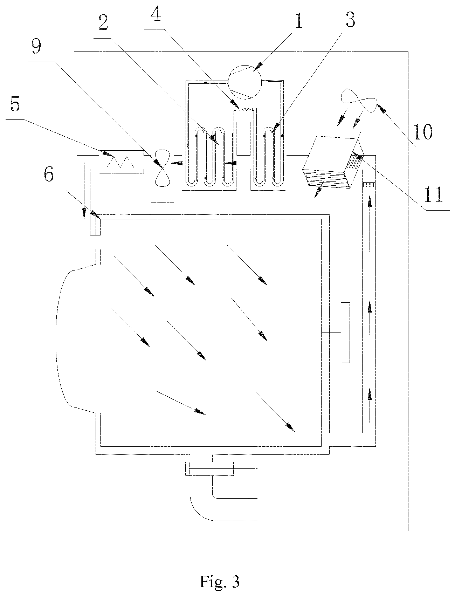

As shown in the Fig.3, a clothes dryer being controllable by the control method according to the invention comprises an air condenser 11. The auxiliary condensing mode is to pre-condense the air exhausted from clothes drying drum via the air condenser 11, so as to reduce the temperature of the air entering a heat pump system and reduce the load of the heat pump system. The other methods are all the same as those in the embodiment 2.

An auxiliary fan can also be arranged on the air condenser 11 to prompt air movement and assist heat dissipation.

## Claims

1. A control method for a clothes dryer that comprises a clothes drying drum (6), a heat pump system and an electrical heating system, the heat pump system comprises a compressor (1), a condenser (2), an evaporator (3) and a throttling device (4), and the electrical heating system is an electrical heating pipe (5), wherein the method comprises:
controlling the heat pump system and the electrical heating system to work cooperatively, thus allowing the clothes dryer to at least comprise a fast mode, in which the electrical heating pipe (5) is turned on after the compressor (1) is turned on and operated stably;
air about to enter the clothes drying drum (6) is controlled to be firstly heated by the condenser (2) of the heat pump system and further heated by the electrical heating pipe (5), and then to enter the clothes drying drum (6); and
a load of the heat pump system is reduced in an auxiliary condensing manner before the heating pipe is switched off, when the load of the heat pump system is close to the maximum load,
**characterized in** controlling the heat pump system and the electrical heating system to work cooperatively, thus allowing the clothes dryer to also comprise:
an energy-saving mode, in which the electrical heating pipe (5) is turned off, and the air about to enter the clothes drying drum (6) is only heated by the condenser (2) of the heat pump system;
and a general mode, in which the electrical heating pipe (5) is turned on, the air about to enter the clothes drying drum (6) is firstly heated by the condenser (2) of the heat pump system and further heated by the electrical heating pipe (5),
the electrical heating pipe (5) is turned off when the load of the heat pump system reaches the maximum load or a temperature of the heat pump system reaches a pre-set temperature, and thus the air entering the clothes drying drum (6) is only heated by the condenser (2) of the heat pump system.

2. The control method for the clothes dryer according to claim 1, wherein the auxiliary condensing manner is to control air exhausted from the clothes drying drum (6) to be pre-condensed by a water condenser (7), so as to reduce a temperature of the air entering the heat pump system and reduce the load of the heat pump system.

3. The control method for the clothes dryer according to claim 1, wherein the auxiliary condensing manner is to assist heat dissipation of the condenser (2) of the heat pump system via an auxiliary fan (10), so as to reduce a temperature of the condenser (2) and reduce the load of the heat pump system.

4. The control method for the clothes dryer according to claim 1, wherein the auxiliary condensing manner is to control air exhausted from the clothes drying drum (6) to be pre-condensed by an air condenser (11), so as to reduce a temperature of the air entering the heat pump system and reduce the load of the heat pump system.

5. The control method for the clothes dryer according to claim 4, wherein an auxiliary fan is arranged on the air condenser (11).

6. The control method for the clothes dryer according to any one of claims from 2 to 5, wherein when the temperature of the condenser (2) of the heat pump system reaches a maximum value T₁, the load of the heat pump system reaches the maximum load; and
when the temperature of the condenser (2) is up to T₁-ΔT, the load of the heat pump system is close to the maximum load.

7. The control method for the clothes dryer according to claim 6, **characterized in** detecting the temperature of the condenser (2),
when the temperature of the condenser (2) exceeds T₁-ΔT, turning on the water condenser (7) to pre-condense the air exhausted from the clothes drying drum (6), or turning on the auxiliary fan (10) to assist heat dissipation of the condenser (2) of the heat pump system, or turning on the air condenser (11) to pre-condense the air exhausted from the clothes drying drum (6).

8. The control method for the clothes dryer according to any one of claims from 1 to 7, wherein when the temperature of the air entering the clothes drying drum (6) is up to a set temperature T₂, turning off the electrical heating pipe (5), and
when the temperature of the air entering the clothes drying drum (6) is reduced to a set temperature T₃, turning on the electrical heating pipe (5) again, wherein T₂ > T₃.

9. The control method for the clothes dryer according to claim 1, **characterized in** detecting the temperature of the condenser (2) in the energy-saving mode and the general mode, and when the temperature of the condenser (2) reaches the maximum value T₁, reducing the load of the heat pump system in the auxiliary condensing manner.

10. The control method for the clothes dryer according to claim 1, wherein a highest operating frequency of the compressor (1) in the fast mode is higher than or equal to that of the compressor (1) in the general mode, and a lowest operating frequency of the compressor (1) in the fast mode is higher than or equal to that of the compressor (1) in the general mode;
a highest operating frequency of the compressor (1) in the general mode is higher than or equal to that of the compressor (1) in the energy-saving mode, and a lowest operating frequency of the compressor (1) in the general mode is higher than or equal to that of the compressor (1) in the energy-saving mode.

## Patentansprüche

1. Steuerungsverfahren für einen Wäschetrockner, der eine Wäschetrocknungstrommel (6), ein Wärmepumpensystem und ein Elektroheizsystem umfasst, wobei das Wärmepumpensystem einen Kompressor (1), einen Kondensator (2), einen Verdampfer (3) und eine Drosselvorrichtung (4) umfasst und das Elektroheizsystem ein Elektroheizrohr (5) ist, wobei das Verfahren Folgendes umfasst;
Steuern des Wärmepumpensystems und des Elektroheizsystems, sodass diese zusammenarbeiten und so ermöglichen, dass der Wäschetrockner zumindest einen Schnellmodus umfasst, in dem das Elektroheizrohr (5) eingeschaltet wird, nachdem der Kompressor (1) eingeschaltet ist und stabil betrieben wird;
Steuern von Luft, die im Begriff ist, in die Wäschetrocknungstrommel (6) einzutreten, sodass diese zunächst durch den Kondensator (2) des Wärmepumpensystems und ferner durch das Elektroheizrohr (5) erhitzt wird und dann in die Wäschetrocknungstrommel (6) eintritt; und
Reduzieren einer Belastung des Wärmepumpensystems in einer zusätzlichen Kondensationsart, bevor das Heizrohr ausgeschaltet wird, wenn die Belastung des Wärmepumpensystems nahe der Maximalbelastung ist,
**gekennzeichnet durch** Steuern des Wärmepumpensystems und des Elektroheizsystems, sodass diese zusammenarbeiten und so ermöglichen, dass der Wäschetrockner außerdem Folgendes umfasst:
einen Energiesparmodus, in dem das Elektroheizrohr (5) ausgeschaltet ist und die Luft, die im Begriff ist, in die Wäschetrocknungstrommel (6) einzutreten, nur durch den Kondensator (2) des Wärmepumpensystems erhitzt wird; und
einen Normalmodus, in dem das Elektroheizrohr (5) eingeschaltet ist und die in Luft, die im Begriff ist, in die Wäschetrocknungstrommel (6) einzutreten, zunächst durch den Kondensator (2) des Wärmepumpensystems und ferner durch das Elektroheizrohr (5) erhitzt wird,
wobei das Elektroheizrohr (5) ausgeschaltet wird, wenn die Belastung des Wärmepumpensystems eine Maximalbelastung erreicht oder eine Temperatur des Pumpensystems eine voreingestellte Temperatur erreicht, und somit die in die Wäschetrocknungstrommel (6) eintretende Luft nur durch den Kondensator (2) des Wärmepumpensystems erhitzt wird.

2. Steuerungsverfahren für den Wäschetrockner nach Anspruch 1, wobei die zusätzliche Kondensationsart steuern soll, dass aus der Wäschetrocknungstrommel (6) ausgeleitete Luft durch einen Wasserkondensator (7) vorkondensiert wird, um eine Temperatur der in das Wärmepumpensystem eintretenden Luft zu reduzieren und die Belastung des Wärmepumpensystems zu reduzieren.

3. Steuerungsverfahren für den Wäschetrockner nach Anspruch 1, wobei die zusätzliche Kondensationsart die Wärmeableitung des Kondensators (2) des Wärmepumpensystems über einen zusätzlichen Lüfter (10) unterstützen soll, um eine Temperatur des Kondensators (2) zu reduzieren und die Belastung des Wärmepumpensystems zu reduzieren.

4. Steuerungsverfahren für den Wäschetrockner nach Anspruch 1, wobei die zusätzliche Kondensationsart steuern soll, dass aus der Wäschetrocknungstrommel (6) ausgeleitete Luft durch einen Luftkondensator (11) vorkondensiert wird, um eine Temperatur der in das Wärmepumpensystem eintretenden Luft zu reduzieren und die Belastung des Wärmepumpensystems zu reduzieren.

5. Steuerungsverfahren für den Wäschetrockner nach Anspruch 4, wobei am Luftkondensator (11) ein zusätzlicher Lüfter angeordnet ist.

6. Steuerungsverfahren für den Wäschetrockner nach einem der Ansprüche 2 bis 5, wobei, wenn die Temperatur des Kondensators (2) des Wärmepumpensystems einen Maximalwert T₁ erreicht, die Belastung des Wärmepumpensystems die Maximalbelastung erreicht; und
wenn die Temperatur des Kondensators (2) bis zu T₁ - ΔT beträgt, die Belastung des Wärmepumpensystem nahe der Maximalbelastung ist.

7. Steuerungsverfahren für den Wäschetrockner nach Anspruch 6, **gekennzeichnet durch**:
Detektieren der Temperatur des Kondensators (2),
wenn die Temperatur des Kondensators (2) T₁ - ΔT überschreitet, Einschalten des Wasserkondensators (7), um die aus der Wäschetrocknungstrommel (6) ausgeleitete Luft vorzukondensieren, oder Einschalten des zusätzlichen Lüfters (10), um die Wärmeableitung des Kondensators (2) des Wärmepumpensystems zu unterstützen, oder Einschalten des Luftkondensators (11), um die aus der Wäschetrocknungstrommel (6) ausgeleitete Luft vorzukondensieren.

8. Steuerungsverfahren für den Wäschetrockner nach einem der Ansprüche 1 bis 7, wobei,
wenn die Temperatur der in die Wäschetrocknungstrommel (6) eintretenden Luft bis zu einer eingestellten Temperatur T₂ beträgt, Ausschalten des Elektroheizrohrs (5), und
wenn die Temperatur der in die Wäschetrocknungstrommel (6) eintretenden Luft auf eine eingestellte Temperatur T₃ reduziert ist, erneutes Einschalten des Elektroheizrohrs (5), wobei T₂ > T₃.

9. Steuerungsverfahren für den Wäschetrockner nach Anspruch 1, **gekennzeichnet durch**
Detektieren der Temperatur des Kondensators (2) im Energiesparmodus und im Normalmodus, und,
wenn die Temperatur des Kondensators (2) den Maximalwert T₁ erreicht, Reduzieren der Belastung des Wärmepumpensystems in der zusätzlichen Kondensationsart.

10. Steuerungsverfahren für den Wäschetrockner nach Anspruch 1, wobei
eine höchste Betriebsfrequenz des Kompressors (1) im Schnellmodus höher als oder so groß wie die des Kompressors (1) im Normalmodus ist und eine niedrigste Betriebsfrequenz des Kompressors (1) im Schnellmodus höher als oder so groß wie die des Kompressors (1) im Normalmodus ist;
eine höchste Betriebsfrequenz des Kompressors (1) im Normalmodus höher als oder so groß wie die des Kompressors (1) im Energiesparmodus ist und eine niedrigste Betriebsfrequenz des Kompressors (1) im Normalmodus höher als oder so groß wie die des Kompressors (1) im Energiesparmodus ist.

## Revendications

1. Procédé de commande pour un sèche-linge qui comprend un tambour de séchage du linge (6), un système de pompe à chaleur et un système de chauffage électrique, le système de pompe à chaleur comprenant un compresseur (1), un condenseur (2), un évaporateur (3) et un dispositif d'étranglement (4), et le système de chauffage électrique étant un tuyau de chauffage électrique (5),
le procédé comprenant :
la commande du système de pompe à chaleur et du système de chauffage électrique afin qu'ils fonctionnent en coopération, permettant ainsi au sèche-linge de comprendre au moins un mode rapide, dans lequel le tuyau de chauffage électrique (5) est mis en marche après que le compresseur (1) a été mis en marche et qu'il fonctionne de manière stable ;
de l'air sur le point d'entrer dans le tambour de séchage du linge (6) est commandé de manière à être d'abord chauffé par le condenseur (2) du système de pompe à chaleur et chauffé d'avantage par le tuyau de chauffage électrique (5), puis à entrer dans le tambour de séchage du linge (6) ; et
une charge du système de pompe à chaleur est réduite par condensation auxiliaire avant que le tuyau de chauffage ne soit arrêté, quand la charge du système de pompe à chaleur est proche de la charge maximale,
**caractérisé par** la commande du système de pompe à chaleur et du système de chauffage électrique afin qu'ils fonctionnent en coopération, permettant ainsi au sèche-linge de comprendre également :
un mode d'économie d'énergie, dans lequel le tuyau de chauffage électrique (5) est arrêté, et l'air sur le point d'entrer dans le tambour de séchage du linge (6) est chauffé uniquement par le condenseur (2) du système de pompe à chaleur ;
et un mode général, dans lequel le tuyau de chauffage électrique (5) est mis en marche, l'air sur le point d'entrer dans le tambour de séchage du linge (6) est d'abord chauffé par le condenseur (2) du système de pompe à chaleur et chauffé d'avantage par le tuyau de chauffage électrique (5),
le tuyau de chauffage électrique (5) est arrêté quand la charge du système de pompe à chaleur atteint la charge maximale ou que la température du système de pompe atteint une température préréglée, et ainsi l'air entrant dans le tambour de séchage du linge (6) est chauffé uniquement par le condenseur (2) du système de pompe à chaleur.

2. Procédé de commande pour le sèche-linge selon la revendication 1, dans lequel la condensation auxiliaire consiste à commander de l'air évacué du tambour de séchage du linge (6) afin qu'il soit précondensé par un condenseur à eau (7), de manière à réduire la température de l'air entrant dans le système de pompe à chaleur et réduire la charge du système de pompe à chaleur.

3. Procédé de commande pour le sèche-linge selon la revendication 1, dans lequel la condensation auxiliaire consiste à aider à la dissipation de la chaleur du condenseur (2) du système de pompe à chaleur par le biais d'un ventilateur auxiliaire (10), de manière à réduire la température du condenseur (2) et réduire la charge du système de pompe à chaleur.

4. Procédé de commande pour le sèche-linge selon la revendication 1, dans lequel la condensation auxiliaire consiste à commander de l'air évacué du tambour de séchage du linge (6) afin qu'il soit précondensé par un condenseur à air (11), de manière à réduire la température de l'air entrant dans le système de pompe à chaleur et réduire la charge du système de pompe à chaleur.

5. Procédé de commande pour le sèche-linge selon la revendication 4, dans lequel un ventilateur auxiliaire est agencé sur le condenseur à air (11).

6. Procédé de commande pour le sèche-linge selon une des revendications 2 à 5, dans lequel, quand la température du condenseur (2) du système de pompe à chaleur atteint une valeur maximale T₁, la charge du système de pompe à chaleur atteint la charge maximale ; et
quand la température du condenseur (2) atteint T₁-ΔT, la charge du système de pompe à chaleur est proche de la charge maximale.

7. Procédé de commande pour le sèche-linge selon la revendication 6, **caractérisé par** la détection de la température du condenseur (2),
quand la température du condenseur (2) dépasse T₁-ΔT, la mise en marche du condenseur à eau (7) pour précondenser l'air évacué du tambour de séchage du linge (6), ou la mise en marche du ventilateur auxiliaire (10) pour aider à la dissipation de la chaleur du condenseur (2) du système de pompe à chaleur, ou la mise en marche du condenseur à air (11) pour précondenser l'air évacué du tambour de séchage du linge (6).

8. Procédé de commande pour le sèche-linge selon une des revendications 1 à 7, dans lequel, quand la température de l'air entrant dans le tambour de séchage du linge (6) atteint une température réglée T₂, arrêt du tuyau de chauffage électrique (5), et
quand la température de l'air entrant dans le tambour de séchage du linge (6) est réduite jusqu'à une température réglée T₃, remise en marche du tuyau de chauffage électrique (5), où T₂ > T₃.

9. Procédé de commande pour le sèche-linge selon la revendication 1, **caractérisé par** la détection de la température du condenseur (2) dans le mode d'économie d'énergie et le mode général, et quand la température du condenseur (2) atteint la valeur maximale T₁, la réduction de la charge du système de pompe à chaleur par la condensation auxiliaire.

10. Procédé de commande pour le sèche-linge selon la revendication 1, dans lequel une fréquence de fonctionnement la plus élevée du compresseur (1) dans le mode rapide est supérieure ou égale à celle du compresseur (1) dans le mode général, et une fréquence de fonctionnement la plus basse du compresseur (1) dans le mode rapide est supérieure ou égale à celle du compresseur (1) dans le mode général ;
une fréquence de fonctionnement la plus élevée du compresseur (1) dans le mode général est supérieure ou égale à celle du compresseur (1) dans le mode d'économie d'énergie, et une fréquence de fonctionnement la plus basse du compresseur (1) dans le mode général est supérieure ou égale à celle du compresseur (1) dans le mode d'économie d'énergie.
